# EUROPÄISCHE PATENTANMELDUNG

(11) **EP 2 387 214 A1**
(43) Veröffentlichungstag der Anmeldung: **16.11.2011**
(21) Anmeldenummer: 11165680.7
(22) Anmeldetag: 11.05.2011
(51) Int. Cl.: H04M 1/2745

(54) **Darstellung personenbezogener Information auf einem Bildschirm**

(30) Priorität: 14.05.2010 DE 102010020475
(71) Anmelder: Deutsche Telekom AG, 53113 Bonn (DE)
(72) Erfinder: Schulz, Sebastian, 50825 Köln (DE)
(74) Vertreter: Braun-Dullaeus, Karl-Ulrich

(57) **Zusammenfassung**

Verfahren zur Darstellung einer mit einer Personen in Bezug stehenden grafischen Information auf dem Bildschirm eines Endgerätes, insbesondere auf dem Bildschirm eines Mobiltelefons, wobei die grafische Information in Verbindung mit einem der Person zugeordneten Adressbucheintrag gespeichert ist, wobei bei Aufruf des Adressbucheintrags der Person die grafische Information in einem ersten Format dargestellt wird und dass während des Verbindungsaufbaus zu einer der Person zugeordneten elektronischen Adresse dieselbe grafische Information in einem zweiten Format dargestellt wird, das größer als das erste Format ist.

## Beschreibung

Die Erfindung betrifft Verfahren zur Darstellung einer mit einer Personen in Bezug stehenden grafischen Information auf dem Bildschirm eines Endgerätes, insbesondere auf dem Bildschirm eines Mobiltelefons, wobei die grafische Information in Verbindung mit einem der Person zugeordneten Adressbucheintrag gespeichert ist. Die Erfindung betrifft zudem ein Endgerät, insbesondere ein Mobiltelefon, zur Umsetzung des Verfahrens.

Heutzutage sind Mobiltelefone mit Adressbuchfunktionen landläufig bekannt. Vor allem werden seit einiger Zeit Adressbuchfunktionen realisiert, die in Verbindung mit den Adressdaten die Speicherung weiterer Textinformation und insbesondere auch von grafischer Information ermöglichen. So können zusammen mit den Adressbucheinträgen ein oder mehrere Bilder und insbesondere das Konterfei der jeweiligen Person gespeichert werden. Wenn nun der Nutzer sein Adressbuch aufruft, werden ihm die zugeordneten Bilder zu den Adressdaten kleinformatig präsentiert, so d**ass** er anhand der Bilder wählen kann oder sich auch nur durch das jeweilige Bild die zu kontaktierende Person "vor Augen" führen kann. Solche Adressbuchfunktionen erhöhen die Attraktivität der Endgeräte, da sie diesen eine besonders individuelle und persönliche Note geben.

Es ist auch bekannt, während der zu der angewählten Person stehenden Verbindung den Hintergrund des Bildschirms mit dem im Adressbuch hinterlegten Bild zu belegen. Das schafft jedoch eine verhältnismäßig große Unübersichtlichkeit auf dem Bildschirm, da dort zusätzlich noch Icons zur Bedienung weiterer Funktionalitäten eingeblendet sein müssen. Zudem wirkt der mit einem solchen individuellen Bild unterlegte Hintergrund je nach Art des Bildes entsprechend unruhig.

Aufgabe der Erfindung ist **es** nunmehr, eine einfache Möglichkeit zu schaffen, die Attraktivität der Endgeräte für den Nutzer auf der Basis der Adressbuchfunktion und der darin als grafische Information hinterlegten Bilder weiter zu erhöhen,

Gelöst wird diese Aufgabe durch das Verfahren nach Anspruch 1 und durch das Endgerät nach Anspruch 10. Die Unteransprüche beschreiben vorteilhafte Ausführungsformen.

Der Grundgedanke der Erfindung besteht darin, gezielt der Funktionalität des Verbindungsaufbaus durch sich verändernde grafische Elemente, insbesondere durch Veränderung des Formates der grafischen Information, eine gewisse Lebhaftigkeit zu geben, um damit dem Nutzer das mitunter etwas zeitraubende Ausführen des Verbindungsaufbaus zu signalisieren und ihm diese Wartezeit zu erleichtern.

Erfindungsgemäß wird das dadurch umgesetzt, dass bei Aufruf des Adressbucheintrags der Person die grafische Information zunächst in einem ersten etwas "zurückhaltenden" Format auf dem Bildschirm, der vorteilhafterweise als Touch Screen ausgebildet ist, dargestellt wird und dass während des Aufbaus der Verbindung zu einer der Person zugeordneten elektronischen Adresse dieselbe grafische Information in einem zweiten Format etwas prominenter dargestellt wird. Dazu wird das zweite Format größer als das erste Format gewählt aber auch nicht so groß, dass es den gesamten Hintergrund ausfüllt. Dabei kann das Format während des Verbindungsaufbaus beispielsweise auch erkennbar solange anwachsen, bis die Verbindung steht. Um die Aktion des Verbindungsaufbaus noch besser hervorzuheben, kann das Format auch pulsierend bis zu seiner endgültigen Größe anwachsen.

Vorteilhafterweise wird dann nach dem Zustandekommen der Verbindung dieselbe grafische Information in einem dritten Format dargestellt, das größer oder gleich dem zweiten Format ist. Dieses dritte Format ist dann aber stabil, um die stehende Leitung zu symbolisieren. Die Erfindung kann sich auch in entsprechend anderer Reihenfolge manifestieren, So kann bei Nichtzustandekommen und/oder bei Abbruch der Verbindung die grafische Information, die insbesondere ein Konterfei ist, auch wieder auf ein kleineres Format reduziert werden, was natürlich schneller geht, da eine Verbindung schneller abgebrochen als aufgebaut ist.

Auf diese Weise springt die grafische Information den auf das Zustandekommen der Verbindung wartenden Nutzer ein wenig an und signalisiert ihm dadurch, dass sich bezüglich des Verbindungsaufbaus etwas tut. Diese grafische Darstellung der Anrufzielperson vermittelt den Eindruck des Näherkommens und suggeriert damit, dass die Anrufzielperson gleich da ist. Der Nutzer kann den Verbindungsaufbau auf dem Bildschirm verfolgen und sieht, wann die Verbindung steht. Wenn er sein Telefon vor sich liegen hat, kann er es dann ans Ohr führen, wenn er die stehende Verbindung signalisiert bekommt. Umgekehrt kann eine Reduktion der Größe ein in den Hintergrund treten und damit das Nichtzustandekommen und/oder den Abbruch symbolisieren. Dabei kann eine solche Präsentation alternativ oder zusätzlich zu der bekannten Darstellung der Information "Verbindung wird aufgebaut" oder "Verbindung wird abgebrochen" auf dem Bildschirm erscheinen. Sie trägt zur Individualisierung von Mobiltelefonen und damit zur weiteren Erhöhung deren Attraktivität bei.

Besonders eindrucksvoll ist **es**, wenn die grafische Information ein der Person zugeordnetes Bild ist Das kann ein Bild einer der Person zuzuordnenden Situation, beispielsweise deren häusliche Umgebung, sein. Der stärkste Effekt dieser Funktionalität wird jedoch erzielt, wenn das Bild ein Konterfei, also ein Bild des Gesichtes oder ein Bild der gesamten Person ist. In diesem Falle wird der Eindruck erweckt, dass die Person während des Anwahlvorganges auf den Nutzer als Betrachter des Bildschirmes zukommt Dabei ist es für die Steigerung der Symbolkraft von Vorteil, wenn das Konterfei der anzuwählenden Person nach Auswahl aus dem Adressbuch an zentraler Stelle auf dem Bildschirm dargestellt wird und ein ebenfalls eingeblendetes Icon die Möglichkeit des Verbindungsaufbaus signalisiert. Bei Auswahl des Verbindungsaufbaus verändert dann dasselbe Konterfei sein Format in einer erfindungsgemäßen Weise.

Zudem ist es für die erfindungsgemäße Funktionalität vorteilhaft, wenn die elektronische Adresse eine Telefonnummer ist beim Verbindungsaufbau zu der Telefonnummer in Verbindung mit dem prominent und zentral dargestellten Bild ebenfalls dargestellt wird. Durch Einblendung der Nummer in Verbindung mit dem Bild wird dem Nutzer signalisiert, dass diese Nummer gerade angerufen wird. Die grafische Information, also insbesondere das Konterfei, kann demnach in Verbindung mit weiterer, insbesondere aus dem Adressbuch erhältlicher, Information auf dem Bildschirm dargestellt werden.

In einer besonders vorteilhaften Ausführungsform ist das Konterfei von einem Rahmen in der Art eines Passepartout umgeben. Das eröffnet die Möglichkeit der grafischen Gestaltung der Rahmenflächen (Rahmenabschnitte), die farbig unterlegt und/oder mit Text versehen werden können. In einer besonders attraktiven Ausführungsform ist die Breite des unteren Rahmenabschnittes größer ist als die Breite der anderen drei Rahmenabschnitte, so dass der Eindruck eines Polaroid-Fotos erweckt wird. Der untere Rahmenabschnitt wird vorteilhafterweise mit einer Information, beispielsweise bezüglich der im Moment ablaufenden Funktion, belegt. Die Rahmenabschnitte können auch als aktive Zonen auf dem Touch Screen zur Funktionalität des Mobiltelefons beitragen.

Gerade bei der Gestaltung des Rahmens in der Art eines Polaroid-Fotos ist **es** besonders vorteilhaft und erzeugt eine große Aufmerksamkeit, wenn der Rahmen je nach Situation, also beispielsweise während der Anwahl der Telefonnummer und/oder während der stehenden Leitung zum Gesprächspartner eingefärbt ist. Als Farben bieten sich grün und rot an, wie es der Nutzer von der Tastatur seines Mobiltelefons gewöhnt ist. Beispielsweise kann die grüne Farbe ein Abheben des Telefonhörers symbolisieren, während rot das Auflegen symbolisiert. Das Abheben und Auflegen kann durch Berühren der entsprechenden Zonen auf dem Touch Screen geschehen.

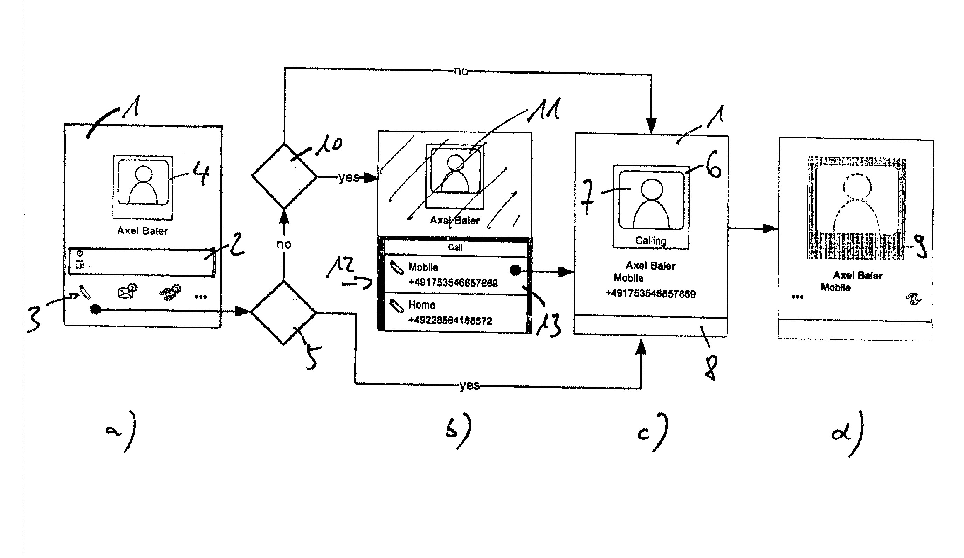

Weitere Merkmale und Vorteile ergeben sich aus der nachfolgenden Beschreibung anhand der Figur, die einen Funktionsablauf symbolisiert.

Die Figur zeigt schematisch ein zur Umsetzung des Verfahrens geeignetes Mobiltelefon mit Touch Screen, Das Mobiltelefon realisiert eine Funktion, die bei Verbindungsaufbau zur Rufnummer der Person deren Konterfei prominent auf dem Bildschirm darstellt. Dabei ist das Format der Darstellung beim Verbindungsaufbau größer als das Format des Konterfeis der Person, wie **es** in Verbindung mit der Adressbuchfunktion dargestellt wird.

Die Adressbuchfunktion ist in der Darstellung a) gezeigt. Zu der Person Axel Baier werden auf dem Bildschirm 1 ein Feld 2 mit Zusatzinformation eine Symbolleiste 3 mit vier Symbolen und vor allem sein Konterfei 4 in kleinem Format dargestellt. Wenn der Nutzer das Symbol, das einen Telefonhörer zeigt, berührt, fragt die Funktion in der Entscheidungsraute 5 ab, ob eine Tarifnummer angewählt werden soll. Ist die Antwort Ja ("yes"), wird die Anwahl entsprechend der Darstellung c) durchgeführt. Während der Anwahl ist das von einem Rahmen 6 umgebene Konterfei 7 prominent in größerem Format und mittig auf dem Bildschirm 1 zusammen mit dem Namen und der Nummer von Axel Baier angezeigt. Die Anwahl kann durch Berühren der unteren Leiste 8 ("cancel") abgebrochen werden. Im unteren Rahmenabschnitt wird durch den Begriff "calling" angezeigt, dass gerade die Anwahl durchgeführt wird. Wenn nun der Teilnehmer Axel Baier abhebt, wird sein Konterfei in noch größerem Format dargestellt (Darstellung d) und von einem eingefärbten Rahmen 9 umgeben. Dabei kann der Rahmen 9 rot eingefärbt sein, um zu signalisieren, dass eine Berührung zum Abbruch der Verbindung führen wird.

Wird die Frage in der Entscheidungsraute 5 mit "nein" beantwortet, wird in einer weiteren Entscheidungsraute 10 abgefragt, ob mehr **als** nur eine Telefonnummer gespeichert ist. Wenn die Antwort "nein" ist, wird die Funktionalität nach der beschriebenen Darstellung c) ausgeführt. Bei "ja" wird das Konterfei 11 von Axel Baier etwas überblendet und am unteren Rand des Bildschirms tut sich ein Fenster 12 mit den verschiedenen Telefonnummern auf (Darstellung b). Das Berühren eines der angebotenen Felder, hier des Feldes 13, bewirkt die Anwahl der in dem Feld dargestellten Nummer. **Es** wird entsprechend Darstellung c) aufgerufen.

## Patentansprüche

1. Verfahren zur Darstellung einer mit einer Personen in Bezug stehenden grafischen Information auf dem Bildschirm eines Endgerätes, insbesondere auf dem Bildschirm eines Mobiltelefons, wobei die grafische Information in Verbindung mit einem der Person zugeordneten Adressbucheintrag gespeichert ist,
**dadurch gekennzeichnet,**
**dass** bei Aufruf des Adressbucheintrags der Person die grafische Information in einem ersten Format dargestellt wird und dass während des Verbindungsaufbaus zu einer der Person zugeordneten elektronischen Adresse dieselbe grafische Information in einem zweiten Format dargestellt wird, das größer als das erste Format ist.

2. Verfahren nach Anspruch 1,
**dadurch gekennzeichnet,**
**dass** nach Zustandekommen der Verbindung dieselbe grafische Information in einem dritten Format dargestellt wird, das größer oder gleich dem zweiten Format ist.

3. Verfahren nach Anspruch 1 oder 2,
**dadurch gekennzeichnet,**
**dass** die grafische Information während des Verbindungsaufbaus erkennbar solange anwächst, bis die Verbindung steht, wobei das Anwachsen insbesondere pulsierend geschieht.

4. Verfahren nach einem der vorherigen Ansprüch,
**dadurch gekennzeichnet,**
**dass** die grafische Information ein der Person zugeordnetes Bild, insbesondere ihr Konterfei, ist.

5. Verfahren nach Anspruch 4,
**dadurch gekennzeichnet,**
**dass** die elektronische Adresse eine Telefonnummer ist und **dass das** Konterfei beim Verbindungsaufbau zu der Telefonnummer prominent und zentral auf dem Bildschirm dargestellt wird.

6. Verfahren nach Anspruch 5,
**dadurch gekennzeichnet,**
**dass** bei Nichtzustandekommen und/oder bei Abbruch der Verbindung das Konterfei wieder auf ein kleineres Format reduziert wird.

7. Verfahren nach einem der vorherigen Ansprüche ,
**dadurch gekennzeichnet,**
**dass** das Konterfei von einem Rahmen in der Art eines Passepartout umgeben ist, wobei insbesondere die Breite des unteren Rahmenabschnittes größer ist als die Breite der anderen drei Rahmenabschnitte.

8. Verfahren nach Anspruch 7,
**dadurch gekennzeichnet,**
**dass** das der Rahmen bei Anwahl der Telefonnummer grün eingefärbt ist

9. Verfahren nach einem der vorherigen Ansprüche,
**dadurch gekennzeichnet,**
**dass** das Konterfei in Verbindung mit weiterer, insbesondere aus dem Adressbuch erhältlicher Information auf dem Bildschirm dargestellt wird.

10. Endgerät, insbesondere Mobiltelefon, zur Umsetzung des Verfahrens nach einem der vorhergehenden Ansprüche,
**gekennzeichnet durch**
eine Funktion, die während des Verbindungsaufbaus zur Rufnummer der Person deren Konterfei prominent auf dem Bildschirm darstellt, wobei das Format der Darstellung während des Verbindungsaufbaus größer ist als das Format des Konterfeis der Person, wie **es** in Zusammenhang mit der Adressbuchfunktion dargestellt wird.
